# EUROPEAN PATENT APPLICATION

(11) **EP 2 107 774 A1**
(43) Date of publication of application: **07.10.2009**
(21) Application number: 08006280.5
(22) Date of filing: 31.03.2008
(51) Int. Cl.: H04M 3/42, H04M 3/523

(54) **Method of and network element for estimating a point in time**

(71) Applicant: Nokia Siemens Networks Oy, 02610 Espoo (FI)
(72) Inventor: Kollar, Martin, 04011 Kosice (SK)
(74) Representative: Bruglachner, Thomas E.

(57) **Abstract**

A method of estimating a point in time a communication channel is free is provided, wherein the method comprises receiving information about a starting point in time of a first call on the communication channel of a communication network, and estimating a point in time when the communication channel is free based on the information about the starting point in time and an expected duration of the first call.

## Description

### Field of Invention

The present invention relates to a communication network element, in particular to a network element adapted to estimate a point in time a communication channel is free. Furthermore, the invention relates to a method of estimating a point in time a communication channel is free, a program element, and a computer-readable medium.

### Art Background

In nowadays mobile communication networks it may happen that a mobile subscriber is requesting for a call and the call is rejected due to congestion, i.e. a lack of resources in the communication network. In such a situation the mobile subscriber has no other possibility as to try from time to time whether the network is free to realize his/her call or not.

Thus, there may be a need for a communication network element and a method of operating a communication network which provides an improved performance, in particular, with respect to handling of congestion.

### Summary of the Invention

This need may be met by a communication network element, a method of estimating a point in time a communication channel is free, a program element, and a computer-readable medium according to the independent claims. Advantageous embodiments of the present invention are described by the dependent claims.

According to an exemplary aspect a method of estimating a point in time a communication channel is free is provided, wherein the method comprises receiving information about a starting point in time of a first call on the communication channel of a communication network, and estimating a point in time when the communication channel is free based on the information about the starting point in time and an expected duration of the first call. In particular, the communication network may be a mobile communication network. For example, the first call may be a telephone call or a call relating to data transfer, e.g. a uploading or downloading of data. In particular, the starting point in time may be measured by a different or the same communication network element. Moreover, the method may be performed for a plurality of communication channels and/or a plurality of calls simultaneously, i.e. it may be possible to estimate a plurality of points in time a respective plurality of communication channels are free.

According to an exemplary aspect a communication network element for estimating a point in time a communication channel is free is provided, wherein the communication network element comprises a receiving unit adapted to receive information about a starting point in time of a first call on the communication channel of a communication network, and an estimation unit adapted to estimate a point in time when the communication channel is free based on the information about the starting point in time and an expected duration of the first call. In particular, the estimation unit may be a processing unit which may have implemented or running a suitable program for performing the estimation or calculation and may be connected to the receiving unit. Moreover the communication network may be a mobile communication network, e.g, a cellular mobile communication network.

According to an exemplary aspect of the invention a program element is provided, which, when being executed by a processor, is adapted to control or carry out a method according to an exemplary aspect.

According to an exemplary aspect a computer-readable medium is provided, in which a computer program is stored which, when being executed by a processor, is adapted to control or carry out a method according to an exemplary aspect.

The term "call" may particularly denote any request for or any performing of data transmission using the communication network. Thus, the term "call" may denote a common telephone call, i.e. transmission of acoustic waves either in analogous or digital form, but may also denote a transmission of general data relating to an upload or download of pictures, programs, music titles, or any kind of digital or analogous data.

The term "communication channel" may particularly denote any channel or line which may be used to transmit calls in the above mentioned meaning. In particular, a channel may denote a specific connection between two points, either by line or wire or wireless, e.g. by using RF-signals, which is adapted to handle a single communication, e.g. one telephone call or one upload or download of one user. However, a communication channel may also be used by several users or several communications, e.g. when using commonly known multiplexing processes, e.g. time-multiplexing.

By providing a method to estimate a point in time a communication channel is free according to an exemplary aspect of the invention it may be possible to improve the performance of a communication network. By providing such a point in time it may be possible to estimate an advantageous point in time a requested call can be handled without being rejected due to a congestion of the communication network. Thus, it may be possible to use the capacity of a communication network more evenly, since the communication network may not be stressed by calls requests which cannot be handled anymore. Furthermore, a subscriber may get information concerning the estimated point in time, so that the number of requests for a call may be reduced. The method may in particular, be useful for communication networks having low capacity or high probability that congestions may occur, e.g. due to peak loads at certain points in time.

A gist of an exemplary aspect may be seen in the fact that a point in time is estimated which indicates a point in time at which it is probable that a congested or busy communication network may be able to handle a new call. This information may then enable an improved management of the communication network, e.g. by a provider of the communication network or by a user using the communication network.

Next, further exemplary embodiments of the method are described. However, these embodiments also apply to the communication network element, the program element, and the computer-readable medium.

According to another exemplary embodiment the method further comprises transmitting the estimated point in time to a network element.

In particular, the network element may be a user equipment, a mobile station or base station of the communication network. By transmitting the estimated point in time to a user equipment, e.g. a mobile phone, a PDA, a laptop, or a desktop computer, it may be possible that the user equipment and/or the user of the same is informed when it may be probable that a communication channel or line may be free. For example, the estimated point in time may be transmitted together with a reject message which reject message may indicate that no call can be made at that point in time, e.g. since all communication channels of the communication network or at least of a cell of a communication network are busy.

According to another exemplary embodiment of the method the method is performed by a communication network element, and the method further comprises receiving a second call request by a further communication network element, and transmitting the estimated point in time to the further communication network element.

In particular, the communication network element may be a mobile station and/or the further communication network element may be a user equipment.

According to another exemplary embodiment the method further comprises reserving a free communication channel for the further communication network element.

In particular, the reserved communication channel may be the first communication channel becoming free again and/or may be the communication channel for which the point in time is estimated. By providing such a reservation feature it may be possible to ensure that the call requests are handled according to a given sequence, i.e. the sequence the requests are originally made. This may lead to an improved performance or improved use of the capacity of the communication network, and may also lead to an improved satisfaction of the users or subscribers of the communication network.

According to another exemplary embodiment of the method the expected duration of the first call is based on a mean duration value of prior calls.

In particular, a plurality of expected duration values may be calculated, wherein each expected duration value may correspond to a specific parameter influencing the expected duration, for example.

That is, it may be possible to calculate the expected duration based on a mean or average value of prior calls. Such a mean value may either be calculated unweighted or the calculation may include some weighting factors for calls of specific subscribers or users. The used prior calls may be all prior calls of the communication network, or only some specific prior calls, like calls originating from the same subscriber or calling the same subscriber or relating to a specific cell in case the communication network is a cellular communication network, or may relate to a specific time of day. For example, calls performed during business hours may have a different mean duration time than calls performed in the morning, evening or on weekend. Summarizing it may be possible to calculate different mean duration values based on specific parameters which influence the duration of calls.

According to another exemplary embodiment of the method the first call is performed between a first subscriber and a second subscriber, and the expected duration of time is based on prior calls of the first subscriber and/or on prior calls of the second subscriber. In particular, the expected duration may be calculated as the mean value of prior call durations of the first subscriber and/or of the second subscriber.

The first subscriber may be the caller and the second subscriber may be the callee, i.e. the person or service which is called by the caller. The caller and/or the callee of the first call may be important parameters for calculating an expected duration of the first call. Thus, a binning using at least one of this parameter for calculating an expected duration of the call may lead to an improved estimated point in time the communication channel is free, i.e. the first call ends. For example, the expected duration of time may depend on the fact what type of call the specific call relates to, e.g. whether the callee is an information center or call center or whether the caller calls a relative, i.e. whether the call is a private call. In general, a private call may lead to a longer mean duration time than calls wherein an information center is involved. In case the subscriber used to calculate the duration of the call is a new caller or callee an average duration may be used for the expected duration. Such an average duration may relate to an average of all calls.

Next, further exemplary embodiments of the communication network element are described. However, these embodiments also apply to the method, the program element, and the computer-readable medium.

According to another exemplary embodiment the communication network element further comprises a determination unit adapted to determine the starting point in time of the first call.

Alternatively, the determination of the starting point in time may also be performed by a unit external to the communication network element, e.g. by another communication network element.

According to another exemplary embodiment of the communication network element the communication network element is a base station of the communication network.

The communication network element may also be a mobile station or a user equipment, e.g. a mobile phone, a PDA, a laptop or a desktop computer. In that case the user equipment may be adapted to transmit the estimated point in time and/or the expected duration of the call to a base station together or independently to a request of a call. That is the user equipment may be adapted to calculate the expected duration of a call based on values of some predefined parameters.

According to another exemplary embodiment of the communication network element the base station is adapted to transmit the estimated point in time to another base station of the communication network.

In particular, the other base station may be a base station of a neighbouring cell of a cellular communication network.

It has to be noted that embodiments and aspects of the invention have been described with reference to different subject-matters. In particular, some embodiments and aspects have been described with reference to apparatus type claims whereas other embodiments have been described with reference to method type claims. However, a person skilled in the art will gather from the above and the following description that, unless other notified, in addition to any combination of features belonging to one type of subject-matter also any combination between features relating to different subject-matters, in particular between features of the apparatus type claims and features of the method type claims is considered to be disclosed with this application.

The aspects and exemplary embodiments defined above and further aspects of the invention are apparent from the example of embodiment to be described hereinafter and are explained with reference to these examples of embodiment.

### Brief Description of the Drawings

Fig. 1 schematically shows probability distribution functions of duration of calls.
Fig. 2 schematically illustrates the estimation of time points according to an exemplary embodiment of the invention.

### Detailed Description

The illustration in the drawing is schematic.

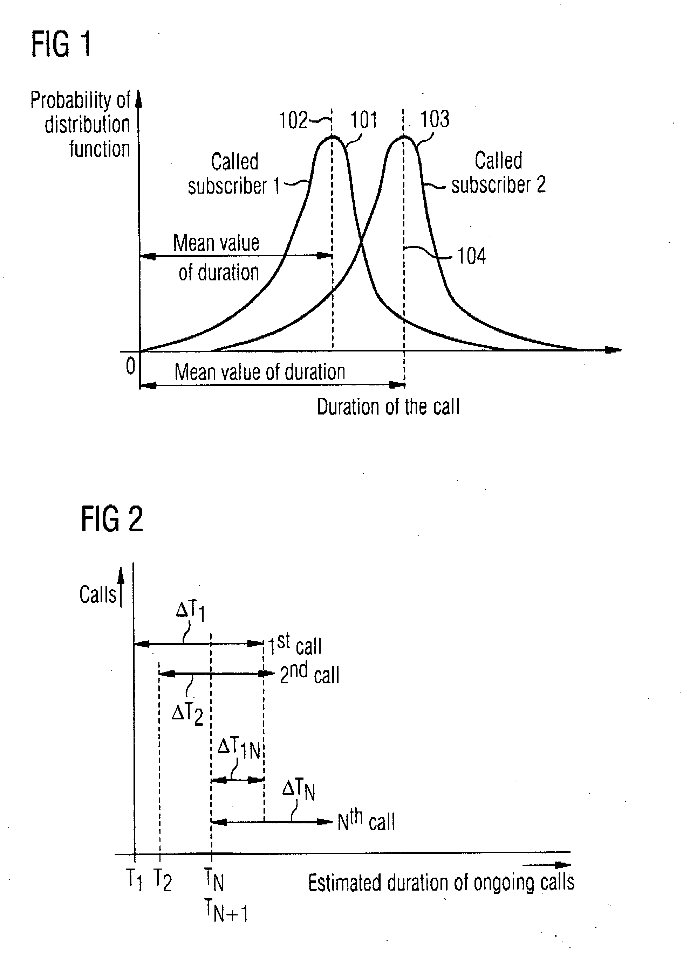

With reference to Figs. 1 and 2 a method of estimation of a point in time a communication channel of a mobile communication network is free will be described in more detail.

Calls realized by a mobile subscriber may be divided into two groups. A first group contains the calls realized many times for a given called subscriber or callee in the past, while the second group may contain the calls that are going to be realized for the first time or only has been realized for a few times. Many times the duration of the call depends on with whom the mobile subscriber is speaking. For example, when it is a call with an information center for train traffic information its duration may be substantially shorter in comparison to a call' with a relative. Thus, when a statistical analysis would be provided for call duration per called subscriber and/or per calling subscriber, the results might be like that shown in Fig. 1. Fig. 1 shows two probability distribution functions for two subscribers. In particular, Fig. 1 shows a graph 101 representing a first probability distribution function concerning a first called subscriber (callee) having a first mean value of duration, which is indicated by line 102. Furthermore, Fig. 1 shows a graph 103 representing a second probability distribution function concerning a second called subscriber having a second mean value of duration, which is indicated by line 104. The two graphs or curves represent the dependence of the probability on the call duration. The most probable duration of each call calling the specific subscriber is the mean value which may be simply calculated as the average duration of the calls in the past. Alternatively, the median value may be used for an expected duration of the call. To calculate such a mean value some samples related to each callee is necessary. Therefore, this analysis can be performed for calls of the above-mentioned first group of calls. For calls of the second group this analysis may not be performed but for a first approximation the expected duration of such calls could be replaced by the mean value calculated from all call durations independent of the called subscriber, or may be replaced by the mean value calculated from all call durations of the calling subscriber.

For the following description it is considered that a mobile station or user equipment is equipped with the functionality to provide the most probable duration of the call which is going to be requested and/or may be adapted to perform a method according to an exemplary aspect of the invention, i.e. to estimate a point in time a communication channel is free again based on received starting points in time of ongoing calls. The information of the most probable duration of the requested call may be sent to a base station within the call request message. The cell corresponding to the base station may be able to handle a number of N calls (NTCHs) at the same time. Furthermore, the base station may be adapted to perform a method of estimation of a point in time a communication channel is free according to an exemplary embodiment of the invention.

Fig. 2 schematically illustrates a possible scenario in a mobile communication network. For example, when in a moment T₁ a first call has been established with an approximated or expected duration ΔT₁, at the moment T₂ a call with approximated duration ΔT₂,..., and at the moment T_{N} a call with an approximated duration ΔT_{N}, it may not be possible to handle another requested call requested at time T_{N+1} due to the fact that the cell is overloaded and neighbouring cells are as well not able to handle this requested call, so that the requested call is rejected. However, since the base station knows the estimated duration of all ongoing calls it may be possible to inform the mobile subscriber about the point in time the cell could be used again, i.e. the expected point in time when at least one communication channel is free again. This information may be sent to the user equipment within or together with the reject message. In case of the example illustrated in Fig. 2 the call No. 1 starting at time T₁ is expected to be finished as first in relation to the requested call N+1 at T_{N+1} and therefore information ΔT_{1N} may be sent within the rejected message. The point in time T_{N+1} + ΔT_{1N} represents the estimated point in time when the at least the communication channel corresponding to the first call is expected to be free again.

The same algorithm may also be applied to the cell of the called subscriber when the expected call duration in dependence on mobile subscriber originating the call can be sent within one of the acknowledge messages.

It should be noted that it may be possible that there are a plurality of call requests after T_{N}, i.e. in the time frame the respective cell is overloaded. Therefore if all of them try to request a new call at the estimated point in time ΔT_{1N} only one of them could be successful. In this case the method may be adapted in such a way that other unsuccessful ones will be informed about the next estimated point in time when the cell could be free for their calls using the same algorithm or procedure. But the method may also be adapted to inform the mobile subscriber not only about the estimated point in time but also to provide the mobile subscriber with the possibility to reserve a call after the estimated point in time.

Summarizing by providing a method according to an exemplary embodiment of the invention it may be possible to inform mobile subscribers of which call requests are rejected about the time when the communication network or cell of the communication network may be ready to realize their calls. Furthermore, according to some specific embodiments it may also be possible to offer to such mobile subscribers the possibility to reserve a call if an estimated time frame meets the requests of the specific subscriber.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of reference signs:

- 100: Cellular mobile network
- 101: First probability distribution function
- 102: Mean value of the first probability distribution function
- 103: Second probability distribution function
- 104: Mean value of the second probability distribution function

## Claims

1. A method of estimating a point in time a communication channel is free, the method comprising:
receiving information about a starting point in time of a first call on the communication channel of a communication network, and
estimating a point in time when the communication channel is free based on the information about the starting point in time and an expected duration of the first call.

2. The method according to claim 1, further comprising:
transmitting the estimated point in time to a network element.

3. The method according to claim 1,
wherein the method is performed by a communication network element, and wherein the method further comprises:
receiving a second call request by a further communication network element, and
transmitting the estimated point in time to the further communication network element.

4. The method according to claim 3, further comprising:
reserving a free communication channel for the further communication network element.

5. The method according to claim 1,
wherein the expected duration of the first call is based on a mean duration value of prior calls.

6. The method according to claim 1,
wherein the first call is performed between a first subscriber and a second subscriber, and
wherein the expected duration of time is based on prior calls of the first subscriber and/or on prior calls of the second subscriber.

7. The method according to claim 6,
wherein the expected duration is calculated as the mean value of prior call durations of the first subscriber and or of the second subscriber.

8. A communication network element for estimating a point in time a communication channel is free, the element comprising:
a receiving unit adapted to receive information about a starting point in time of a first call on the communication channel of a communication network, and
an estimation unit adapted to estimate a point in time when the communication channel is free based on the information about the starting point in time and an expected duration of the first call.

9. The communication network element according to claim 8, further comprising:
a determination unit adapted to determine the starting point in time of the first call.

10. The communication network element according to claim 8,
wherein the communication network element is a base station of the communication network.

11. The communication network element according to claim 10,
wherein the base station is adapted to transmit the estimated point in time to another base station of the communication network.

12. A program element, which, when being executed by a processor, is adapted to control or carry out a method according to claim 1.

13. A computer-readable medium, in which a computer program is stored which, when being executed by a processor, is adapted to control or carry out a method according to claim 1.
